# EUROPÄISCHE PATENTSCHRIFT

(11) **EP 4 196 735 B1**
(45) Veröffentlichungstag und Bekanntmachung des Hinweises auf die Patenterteilung: **01.10.2025**
(21) Anmeldenummer: 21755941.8
(22) Anmeldetag: 05.08.2021
(51) Int. Cl.: F28F 9/02, F28F 3/04, F28D 9/00, B33Y 10/00, B33Y 80/00, H01M 8/04029, H01M 8/04007

(54) **KOMPAKTER WÄRMETAUSCHER**
COMPACT HEAT EXCHANGER
ÉCHANGEUR DE CHALEUR COMPACT

(30) Priorität: 13.08.2020 DE 102020210310
(43) Veröffentlichungstag der Anmeldung: 21.06.2023
(73) Patentinhaber: TKMS GmbH, 24143 Kiel (DE); thyssenkrupp AG, 45143 Essen (DE)
(72) Erfinder: LANGHOLZ, Tom, 22045 Hamburg (DE); CROSSON-ELTURAN, Kava, 24105 Kiel (DE); HEINECKE, Jan Henrik, 24118 Kiel (DE)
(74) Vertreter: thyssenkrupp Intellectual Property GmbH
(86) Internationale Anmeldenummer: PCT/EP2021/071849
(87) Internationale Veröffentlichungsnummer: WO 2022/033947

(56) Entgegenhaltungen:
- EP-A1- 0 109 097
- EP-A1- 1 710 526
- EP-A1- 3 410 054
- EP-A1- 3 517 879
- WO-A1-2013/059941
- WO-A1-2019/144150
- DE-A1- 1 908 800
- DE-A1- 102009 048 060
- DE-A1- 102012 013 755
- DE-A1- 102017 107 577
- DE-A1- 2 161 604
- GB-A- 2 565 143
- JP-A- 2001 133 194
- US-A1- 2015 136 366
- US-A1- 2016 290 733
- US-A1- 2019 101 339

## Beschreibung

Die Erfindung betrifft einen kompakt gebauten Wärmetauscher für Anwendungen, in denen der zur Verfügung stehende Bauraum beschränkt und daher ein effizienter Wärmeübergang auf kleinstem Raum notwendig ist.

Aus der US 2020/0064075 A1 ist ein Gegenflusswärmetauscher mit einem spiralförmigen Aufbau bekannt.

Aus der US 10,434,575 B2 ist ein im additiven Fertigungsverfahren hergestellter Wärmetauscher bekannt, welcher eine Vielzahl an Fluiddurchlässen aufweist.

Aus der US 2019/0063842 A1 ist ein spiralförmiger Wärmetauscher bekannt.

Aus der US 2019/023703A1 ist ein spiralförmiger Wärmetauscher bekannt.

Aus der US 9,657,999 B2 ist ein Wärmetauscher mit alternierenden Kanälen bekannt.

Aus der EP 3 410 054 A1 ist ein additiv erzeugter Wärmetauscher bekannt.

Aus der JP 2013-57 426 A ist ein Plattenwärmetauscher bekannt.

Aus der DE 103 48 803 A1 ist ein Plattenwärmetauscher bekannt.

Aus der DE 19 08 800 A ist ein Plattenkondensator bekannt.

Aus der US 2016 / 0 131 443 A1 ist ein Wärmetauscher bekannt.

Aus der DE 32 41 842 A1 ist ein plattenförmiger Wärmetauscher bekannt.

Aus der DE 11 2015 003 530 T5 ist ein Batteriezellen-Wärmetauscher mit gestaffelter Wärmeübertragungsfläche bekannt.

Aus der DE 10 2017 107 577 A1 ist eine Energieanlage bekannt.

Aus der EP 3 517 879 A1 ist eine Zuführungsplatte für einen Wärmetauscher bekannt.

Aus der WO 2019 / 144 150 A1 ist ein System, Komponenten und ein Verfahren für einen Luft-, Wärme- und Feuchtigkeitstauscher bekannt.

Aus der DE 2 162 604 A1 ist ein Plattenwärmetauscher bekannt.

Aus der GB 2 565 143 A ist ein Wärmetauscher bekannt.

Aus der US 2015 / 0136 366 A1 ist ein Wärmetauscher bekannt.

Während sich in neuester Zeit runde, spiralförmige Wärmetauscher als sehr effizient erwiesen haben, so büßen diese jedoch in Bereichen mit extrem hoher Integrationsdichte, beispielsweise an Bord eines Unterseebootes ein, wo runde Bauteile oftmals nicht so platzsparend in eine Gesamtanlage integriert werden können.

Aufgabe der Erfindung ist es, einen Wärmetauscher zu schaffen, der bei hoher Effizienz gut in Bereiche mit hoher Integrationsdichte und geringem zur Verfügung stehenden Platz integriert werden kann.

Gelöst wird diese Aufgabe durch einen Wärmetauscher mit den in Anspruch 1 angegebenen Merkmalen. Vorteilhafte Weiterbildungen ergeben sich aus den Unteransprüchen, der nachfolgenden Beschreibung sowie den Zeichnungen.

Der erfindungsgemäße Wärmetauscher ist als Plattenwärmetauscher ausgeführt. Der Plattenwärmetauscher weist Trennwände auf. Die Trennwände trennen Bereiche für ein gasförmiges wärmeabgebendes Medium und eine wärmeaufnehmende Wärmetauschflüssigkeit, insbesondere um eine wärmeaufnehmende Kühlflüssigkeit oder um einen wärmeabgebenden Warmwasserstrom, besonders bevorzugt um eine wärmeaufnehmende Kühlflüssigkeit. Der Wärmetauscher weist erste Bereiche zwischen den Trennwänden für ein gasförmiges wärmeabgebendes Medium und zweite Bereiche zwischen den Trennwänden für eine Wärmetauschflüssigkeit auf, wobei die ersten Bereiche und die zweiten Bereiche durch eine Mehrzahl von Trennwände getrennt sind. Eine Mehrzahl an Trennwänden sind bevorzugt 5 bis 200 Trennwände, besonders bevorzugt 20 bis 50 Trennwände. Jeweils zwischen zwei benachbarten Trennwänden sind erste Bereiche und zweite Bereiche alternierend angeordnet. Somit grenzt jeweils ein wärmeabgebender Bereich durch eine Trennwand getrennt an einen wärmeaufnehmenden Bereich. Mit Ausnahme der beiden äußersten Bereiche grenzt jeder Bereich beidseitig an den entsprechenden Bereich, sodass ein optimaler Wärmeübertrag erfolgen kann. Der Wärmetauscher weist einen Wärmetauschflüssigkeitseinlass und einen Wärmetauschflüssigkeitsauslass auf. Zwischen dem Wärmetauschflüssigkeitseinlass und den zweiten Bereichen ist ein Wärmetauschflüssigkeitsverteilungsbereich angeordnet. Das gasförmige Medium durchströmt den Wärmetauscher bevorzugt von unten nach oben, die Wärmetauschflüssigkeit den Wärmetauscher durchströmt in diesem Fall weiter bevorzugt von oben nach unten. In diesem besonders bevorzugten Fall handelt es sich somit um einen Gegenstromwärmetauscher, welcher von unten nach oben durchströmt wird. Der Wärmetauschflüssigkeitseinlass ist seitlich am oberen Rand des Wärmetauschers angeordnet.

Die Öffnungen zwischen den Verbindungsbereichen und den zweiten Bereichen sind unterschiedlich groß. Hierbei ist die Größe der Öffnungen so eingestellt, dass in alle zweiten Bereiche jeweils die gleiche Menge an Wärmetauschflüssigkeit in der gleichen Zeit strömt. Hierbei sind die Öffnungen bevorzugt alle gleich breit, die unterschiedliche Größe der Öffnungen wird bevorzugt durch die Länge der Öffnungen erreicht. Bevorzugt liegen die Mittelpunkte aller Öffnungen auf einer Linie, die Vergrößerung oder Verkleinerung der Länge erfolgt somit bevorzugt symmetrisch zum Mittelpunkt. Bevorzugt weisen die Öffnungen weiter eine konstante Breite über die Länge auf, wobei die Enden bevorzugt abgerundet, bevorzugt halbkreisförmig oder der Form der oberen Hälfte eines Tropfens entsprechen. Besonders bevorzugt sind die abgerundeten Enden halbkreisförmig.

Durch die unterschiedliche Größe der Öffnungen wird somit erreicht Strömungsunterschiede, welche im Wärmetauschflüssigkeitsverteilungsbereich vorhanden sind, zu kompensieren beziehungsweise die Durchflussmenge zu vergleichmäßigen. In Gebieten, in denen die Öffnungen stärker angeströmt werden, werden die Öffnungen verkleinert, in Gebieten, in denen die Öffnungen schwächer angeströmt werden, werden diese vergrößert. Praktisch kann dieses entweder theoretisch erfolgen, indem eine Simulation der Strömung vorgenommen wird, bis die Strömung durch die Öffnungen in die zweiten Bereiche gleich ist. Oder die Anpassung kann praktisch erfolgen, beispielsweise in dem zunächst nur kleinst mögliche Öffnungen gefertigt werden und dann nach einer Messung der fließenden Flüssigkeitsmengen die Öffnungen vergrößert werden durch welche weniger Flüssigkeit gelangt.

Eine der wichtigsten Herausforderungen zur Erreichung einer hohen Effizienz ist es, dass eine gleichmäßige Verteilung der Wärmetauschflüssigkeit und somit an allen Stellen ein möglichst optimaler Wärmeübergang möglich ist. Daher ist gerade die möglichst gleichförmige Verteilung der Wärmetauschflüssigkeit auf die zweiten Bereiche einer der Schlüssel für den effizienten und platzsparenden Wärmeübergang.

Die Ausführung als Plattenwärmetauscher ermöglicht aufgrund der Bauform eine sehr gute Integration in weitere Systeme, beispielsweise eine Brennstoffzellenvorrichtung und eignet sich somit insbesondere für die Verwendung in hochintegrierten Bereichen.

In einer weiteren Ausführungsform der Erfindung teilt der Wärmetauschflüssigkeitsverteilungsbereich den Wärmetauschflüssigkeitsstrom in einen ersten Teilstrom und einen zweiten Teilstrom, wobei der erste Teilstrom und der zweite Teilstrom seitlich in entgegengesetzte Richtungen geleitet werden. In Flussrichtung der Wärmetauschflüssigkeit wird somit ein Teilstrom nach rechts (+ 75 ° bis 90 °) und der andere nach links (-75 ° bis 90 °) abgelenkt. Dieses kann beispielsweise durch eine in der Zuströmung platzierte Umlenkplatte erfolgen. Bevorzugt hat die Umlenkplatte zumindest die Hälfte der Breite des Wärmetauschflüssigkeitseinlasses. Durch diese Teilung in zwei Teilströme wird bereits eine erste Vergleichmäßigung erreicht, da jeder Teilstrom nur auf die Hälfte der zweiten Bereiche gleichmäßig verteilt werden muss. Der Wärmetauschflüssigkeitsverteilungsbereich weist wenigstens einen ersten Verbindungsbereich und einen zweiten Verbindungsbereich auf, wobei der erste Verbindungsbereich die Wärmetauschflüssigkeit aus dem ersten Teilstrom und der zweite Verbindungsbereich die Wärmetauschflüssigkeit aus dem zweiten Teilstrom in die zweiten Bereiche leiten. An den ersten Verbindungsbereich und an den zweiten Verbindungsbereich schließen sich dann die Öffnungen an, durch die die Wärmetauschflüssigkeit aus den Verbindungsbereichen in die zweiten Bereiche gelangt. Gleichzeitig dient der Raum des ersten Verbindungsbereichs die aus dem ersten Teilstrom eintretende Wärmetauschflüssigkeit gleichmäßig zu verteilen und Strömungsunterschiede möglichst auszugleichen. Analog dient der Raum des zweiten Verbindungsbereichs dazu, die aus dem zweiten Teilstrom eintretende Wärmetauschflüssigkeit gleichmäßig zu verteilen und Strömungsunterschiede möglichst auszugleichen.

In einer weiteren Ausführungsform der Erfindung ist zwischen dem ersten Teilstrom und dem ersten Verbindungsbereich wenigstens ein erster Strömungskörper angeordnet und zwischen dem zweiten Teilstrom und dem zweiten Verbindungsbereich ist wenigstens ein zweiter Strömungskörper angeordnet. Ein Strömungskörper dient dazu den Flüssigkeitsstrom zu teilen und zu lenken. Beispielsweise und bevorzugt sind zwischen dem ersten Teilstrom und dem ersten Verbindungsbereich wenigstens zwei erste Strömungskörper angeordnet und zwischen dem zweiten Teilstrom und dem zweiten Verbindungsbereich sind wenigstens zwei zweite Strömungskörper angeordnet. Dabei sind die Strömungskörper und die Wandung des Wärmetauschflüssigkeitsverteilungsbereichs bevorzugt so angeordnet, dass die Strömung der Wärmetauschflüssigkeit zwischen dem Einlass in den Wärmetauschflüssigkeitsverteilungsbereich und den Verbindungsbereichen zumindest zweimal umgelenkt wird, also nicht direkt auf die Verbindungsbereiche strömen kann. Durch die Anordnung der Strömungskörper ist eine weitere Unterteilung und bessere Verteilung des Wärmetauschflüssigkeitsstromes möglich. Besonders bevorzugt sind zwischen dem ersten Teilstrom und dem ersten Verbindungsbereich drei erste Strömungskörper angeordnet und zwischen dem zweiten Teilstrom und dem zweiten Verbindungsbereich sind drei zweite Strömungskörper angeordnet. Hierdurch ist eine weitere Unterteilung und bessere Verteilung des Wärmetauschflüssigkeitsstromes möglich. Besonders bevorzugt lenkt zumindest einer der Strömungskörper die Strömung um 120 ° bis 180 ° um. Hierdurch wird die Strömung nach der Aufteilung in die Teilströme wieder zurück in die Richtung der Einlassöffnung gelenkt und besser über die gesamte Breite verteilt.

Besonders bevorzugt sind die Strömungskörper derart angeordnet, dass diese jeweils wenigstens einen Verbindungsbereichsteilstrom erzeugen und gerichtet lenken, sodass durch die Summe der Verbindungsbereichsteilströme eine möglichst gleichmäßige Anströmung der Öffnung erreicht wird.

Besonders bevorzugt sind in jedem Verbindungsbereich zwei Verbindungsbereichsteilströme so ausgerichtet, dass diese jeweils die entgegengesetzten äußerten Öffnungen anströmen.

Besonders bevorzugt sind die Form und Position der Strömungskörper auf die Größe der Öffnungen abgestimmt. Besonders bevorzugt erfolgt eine gemeinsame Optimierung der Form, Größe und Position der Strömungskörper gleichzeitig zusammen mit der Optimierung der Größe der einzelnen Öffnungen mit Hilfe einer Strömungssimulation. Die Simulation ist hierbei bevorzugt, da eine nachträgliche Veränderung der Strömungskörper extrem aufwändig, schwierig und weniger genau möglich ist.

Erfindungsgemäß ist der Wärmetauschflüssigkeitseinlass mittig am oberen Rand des Wärmetauschers angeordnet.

In einer weiteren Ausführungsform der Erfindung verlaufen der erste Teilstrom und der erste Verbindungsbereich parallel nebeneinander und der zweite Teilstrom und der zweite Verbindungsbereich verlaufen parallel nebeneinander. Hierdurch ist eine besonders kompakte Bauweise möglich. Insgesamt wird dadurch ein sehr kompakter Wärmetauschflüssigkeitsverteilungsbereich erreicht, der bevorzugt 8 bis 15 Mal so breit ist wie seine Höhe in Strömungsrichtung.

In einer weiteren Ausführungsform der Erfindung sind der erste Verbindungsbereich und der zweite Verbindungsbereich fluidtechnisch direkt miteinander verbunden. Beide Verbindungsbereiche können dabei auch vollständig ineinander übergehen.

In einer weiteren Ausführungsform der Erfindung weisen die zweiten Bereiche wenigstens drei im Wesentlichen horizontal verlaufende Umlenkwände auf, wobei sich die Umlenkwände über 50 % bis 85 % der Breite der zweiten Bereiche erstrecken. Die oberste Umlenkwand befindet sich auf der Seite des Wärmetauschflüssigkeitsverteilungsbereichs und die Umlenkwände beginnen alternierend von den gegenüberliegenden Seiten an den Außenwänden der zweiten Bereiche, sodass sich für die Wärmetauschflüssigkeit eine schleifenförmige Durchströmung des zweiten Bereichs ergibt. Zwischen jeder Umlenkwand und den Außenwänden des zweiten Bereichs sind Eckelemente angeordnet, wobei der Winkel zwischen dem Eckelement und der Umlenkwand maximal 45 ° beträgt und der Winkel zwischen dem Eckelement und der Außenwand maximal 45 ° beträgt.

Besitzt das Eckelement eine dreieckige Form, so ist das Eckelement bevorzugt ein gleichschenkliges Dreieck, welches zwei Winkel von genau 45 ° und einen Winkel von 90 ° aufweist.

Anstelle von ebenen Flächen, welche in einem festen Winkel, beispielsweise 45 °, aufeinander stehen, kann hier und im Folgenden der Fachmann natürlich auch abgerundete Übergänge verwenden, welche entsprechende Winkel vermeiden, sodass Pulverrückstände leicht und vollständig entfernbar sind. Die Verwendung von ebenen Flächen in einem festen Winkel stellt lediglich die einfachste und leicht verständliche Ausführungsform dar.

Horizontal ist waagerecht, sofern der Wärmetauscher auf einer ebenen Fläche angeordnet ist. Unter im Wesentlichen horizontal ist eine um maximal ± 15 °, bevorzugt um maximal ± 10 °, bevorzugt um maximal ± 5 °, von der Waagerechten abweichende Anordnung zu verstehen.

Die Verwendung der Eckelemente hat zwei technische Vorteile. Zum einen wird durch die Vermeidung von größeren Winkeln vermieden, dass Bereiche entstehen, aus welchen Pulver, welches bei Herstellung mittels additiver Fertigungsverfahren im Inneren angeordnet ist, nicht entfernbar ist. Zum anderen werden strömungstechnische Totbereiche so vermieden.

In einer weiteren Ausführungsform der Erfindung weist der Wärmetauschflüssigkeitseinlass einen tropfenförmigen Querschnitt auf. Auch dieses dient dazu, dass im Falle der Fertigung mittels additiver Fertigungstechniken eine erhöhte Stabilität insbesondere während des Fertigungsprozesses in diesem Bereich erreicht wird.

In einer weiteren Ausführungsform der Erfindung weist der Wärmetauschflüssigkeitsauslass einen tropfenförmigen Querschnitt auf. Auch dieses dient dazu, dass im Falle der Fertigung mittels additiver Fertigungstechniken eine erhöhte Stabilität insbesondere während des Fertigungsprozesses in diesem Bereich erreicht wird.

In einer weiteren Ausführungsform der Erfindung weisen die ersten Bereiche Prellbleche auf, wobei die Prellbleche senkrecht zu den Trennwänden angeordnet sind. Sie ragen also in den ersten Bereich hinein und stören das den ersten Bereich durchströmende Gas. Die Prellbleche sind zueinander beabstandet. Weiter sind die Prellbleche übereinander im zickzack angeordnet und die zickzack-Reihen der Prellbleche sind nebeneinander angeordnet. Die Abstände der zickzack-Reihen sind dabei so gewählt, dass sich keine gerade Strömungslinie des Gases vom Eingang zum Ausgang ergibt. Die Seitenwände der Prellbleche weisen einen Winkel zur Trennwand von maximal 45 ° auf.

Die Prellbleche führen zum einen dazu, dass der Strom des gasförmigen wärmeabgebenden Mediums leicht verlängert und damit die Kontaktfläche verbessert wird, wodurch sich Kondensat leichter bildet und leichter aus der Gasphase abgeschieden werden kann. Zum anderen wird durch die Prellbleche die Strömung verlangsamt, der Strömungsweg verlängert und so ein besserer Wärmeaustausch gefördert. Insbesondere durch die Enden der Prellbleche wird auch eine gesteigerte Durchmischung des Gasstromes erreicht, was Strömungskanäle von Gas, welche den Wärmetauscher praktisch ohne Kontakt zu wärmetauschenden Oberflächen durchströmt, minimiert und so den Wärmetauscheffekt steigert. Zum anderen ermöglichen die Prellbleche, dass sich bei der Abkühlung des gasförmigen Mediums abscheidendes Wasser an den Prellblechen entlang nach unten abgeführt werden kann.

Die Prellbleche weisen bevorzugt einen Winkel zur Senkrechten von 10 ° bis 30 ° auf, wobei jeweils übereinander angeordnete Prellbleche in entgegengesetzte Richtung von der Senkrechten abweichen.

Der Winkel von maximal 45 ° zwischen Prellblech und Trennwand führt zum einen zu einer optimalen Fertigungsmöglichkeit im additiven Herstellprozess, insbesondere einer optimalen Entfernung von Pulverrückständen. Zum anderen erweist sich die Geometrie als positiv zur Abführung von kondensiertem Wasser.

In einer weiteren Ausführungsform der Erfindung sind die Prellbleche sich auf den gegenüberliegenden Trennwänden jeweils paarweise gegenüberliegend angeordnet, wobei die sich gegenüberliegenden Prellbleche in der Mitte zwischen den Trennwänden miteinander verbunden sind. Einander gegenüberliegende Trennwände, welche einen gemeinsamen Gasbereich umschließen, sind somit vorzugsweise geometrisch spiegelbildlich zueinander ausgeführt, wobei besonders bevorzugt die Spielebene mittig zwischen den Trennwänden und parallel zu diesen verläuft. Durch diese Verbindungen wird neben einer optimierten Gasführung und einer optimierten Abführung von Kondensat auch die mechanische Stabilität des Wärmetauschers gesteigert.

In einer weiteren Ausführungsform der Erfindung ist das gasförmige wärmeabgebende Medium feuchtigkeitsgesättigt, sodass es während der Abkühlung im Wärmetauscher zur Kondensation von Wasser kommt. Somit fließt das Kondensat in Gegenrichtung der Strömungsrichtung des gasförmigen Mediums. Durch diese Anordnung kann auf einen nachgeschalteten Wasserabscheider verzichtet werden, was den insgesamt benötigten Platzbedarf reduziert.

In einer weiteren Ausführungsform der Erfindung weist der Wärmetauscher eine rechteckige Grundform auf. Dieses ist für die Integration in hochintegrierte Bereiche, beispielsweise eine Brennstoffzellenvorrichtung an Bord eines Unterseebootes.

In einem weiteren Aspekt betrifft die Erfindung ein Verfahren zur Herstellung eines erfindungsgemäßen Wärmetauschers mittels additiver Fertigungstechniken. Die hohe Komplexität und der filigrane Aufbau können gerade mittels additiver Fertigungstechniken effizient hergestellt werden.

In einem weiteren Aspekt betrifft die Erfindung eine Rezirkulationsbrennstoffzellenvorrichtung mit wenigstens einem erfindungsgemäßen Wärmetauscher. Besonders bevorzugt ist der Wärmetauscher mit weiteren Bestandteilen der Rezirkulationsbrennstoffzellenvorrichtung verschweißt. Insbesondere ist wenigstens ein erfindungsgemäßer Wärmetauscher im Rezirkulationskreislauf der Rezirkulationsbrennstoffzellenvorrichtung angeordnet.

In einem weiteren Aspekt betrifft die Erfindung ein Unterseeboot mit einer Brennstoffzellenvorrichtung, wobei die Brennstoffzellenvorrichtung wenigstens einen erfindungsgemäßen Wärmetauscher aufweist. Unterseeboote weisen eine extrem hohe Integrationsdichte auf, sodass hier auch aufwändige Vorrichtungen sinnvoll verwendbar sind, um die geforderten Leistungen mit einem minimalen Platzbedarf zu erfüllen.

Nachfolgend ist der erfindungsgemäße Wärmetauscher anhand eines in den Zeichnungen dargestellten Ausführungsbeispiels näher erläutert.
- Fig. 1: perspektivische Ansicht des Wärmetauschers
- Fig. 2: Aufsicht
- Fig. 3: senkrechter Querschnitt durch einen ersten Bereich
- Fig. 4: Vergrößerung
- Fig. 5: seitliche Ansicht eines Prallbleches
- Fig. 6: senkrechter Querschnitt durch einen zweiten Bereich
- Fig. 7: horizontaler Schnitt durch den Wärmetauschflüssigkeitsverteilungsbereich
- Fig. 8: vertikaler Querschnitt durch die Öffnungen

Alle Figuren zeigen eine besonders bevorzugte Ausführungsform eines Wärmetauschers 10 aus unterschiedlichen Ansichten beziehungsweise Querschnitten.

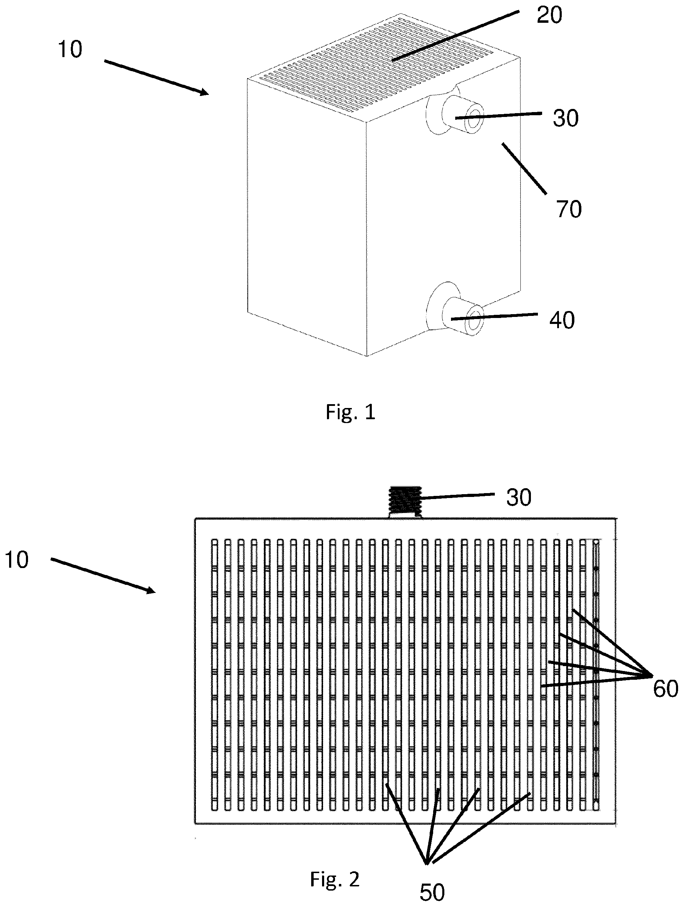

In Fig. 1 ist die perspektivische Außenansicht des Wärmetauschers 10 zu sehen. An der Oberseite 20 sind die schlitzförmigen Öffnungen der ersten Bereiche 50 zu erkennen. An der Seitenwand 70 sind der Wärmetauschflüssigkeitseinlass 30 und der Wärmetauschflüssigkeitsauslass 40 angeordnet. Der Wärmetauschflüssigkeitseinlass 30 ist seitlich am oberen Rand des Wärmetauschers 10 und hierbei mittig angeordnet.

Die Fig. 2 zeigt eine Aufsicht. In der Aufsicht sind die ersten Bereiche 50 und die Trennwände 60 erkennbar.

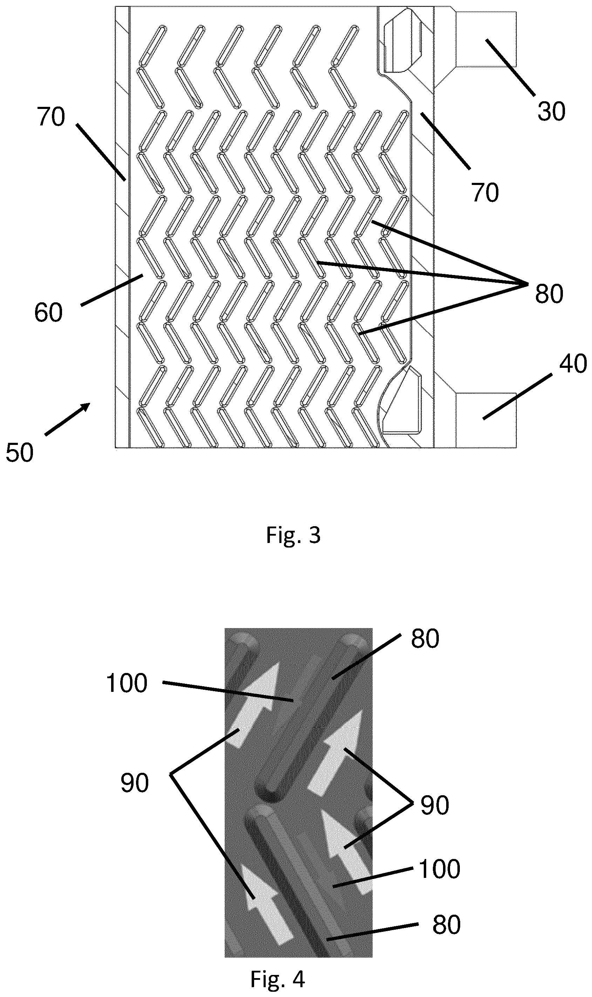

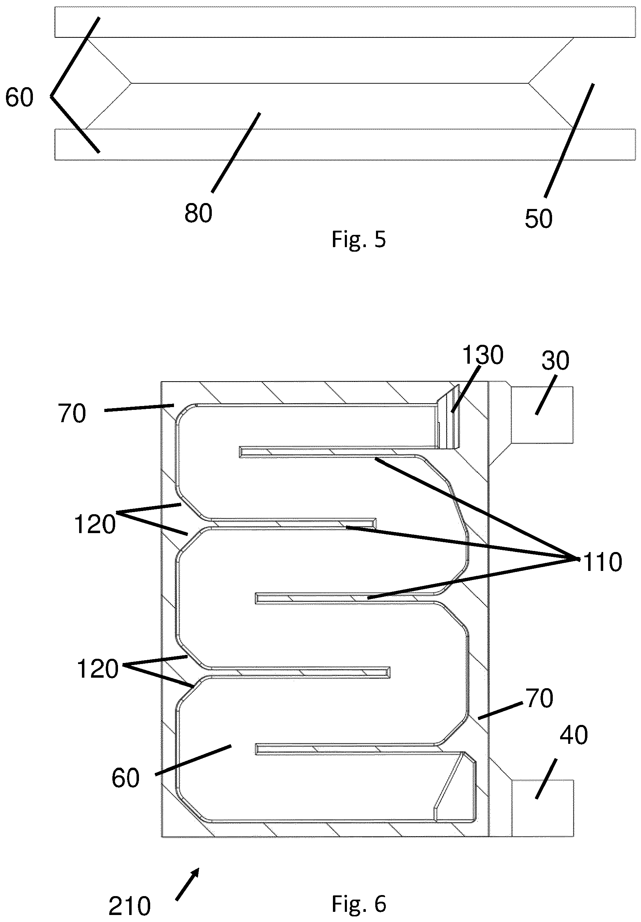

Fig. 3 zeigt einen Querschnitt durch den Wärmetauscher 10 entlang eines ersten Bereiches 50. Das gasförmige wärmeabgebende Medium strömt von unten nach oben, während die Wärmetauschflüssigkeit durch den Wärmetauschflüssigkeitseinlass 30 eintritt und dann im nicht gezeigten zweiten Bereich 210 hinter der Trennwand 60 von oben nach unten fließt um dann durch den Wärmetauschflüssigkeitsauslass 40 unten wieder auszutreten. Die Seitenwände 70 begrenzen den ersten Bereich 50 seitlich. Im Inneren sind Prellbleche 80 in zickzack Reihen nebeneinander angeordnet. Diese Anordnung der Prellbleche 80 ermöglicht, wie in der Vergrößerung der Fig. 4 zu erkennen, dass ein Kondensat jeweils auf der Oberseite der Prellbleche 80 als Kondensatfluss 100 fließen kann. Durch den senkrechten Abstand zwischen den Prellblechen 80 kann das Kondensat jeweils "auf die andere Seite" wechseln und so jeweils auf der Oberseite der Prellbleche 80 zuverlässig abfließen ohne vom Gasstrom 90 wieder verwirbelt zu werden. Die Prellbleche 80 sind in Fig. 5 in einer seitlichen Ansicht gezeigt. Gut erkennbar ist hier, dass die Prellbleche jeweils einen Winkel von 45 ° zu den Trennwänden 60 aufweisen, wodurch Pulverrückstände nach der additiven Fertigung leicht und zuverlässig entfernbar sind. Auch führt dieser Form zu einer effizienten Führung des Kondensats.

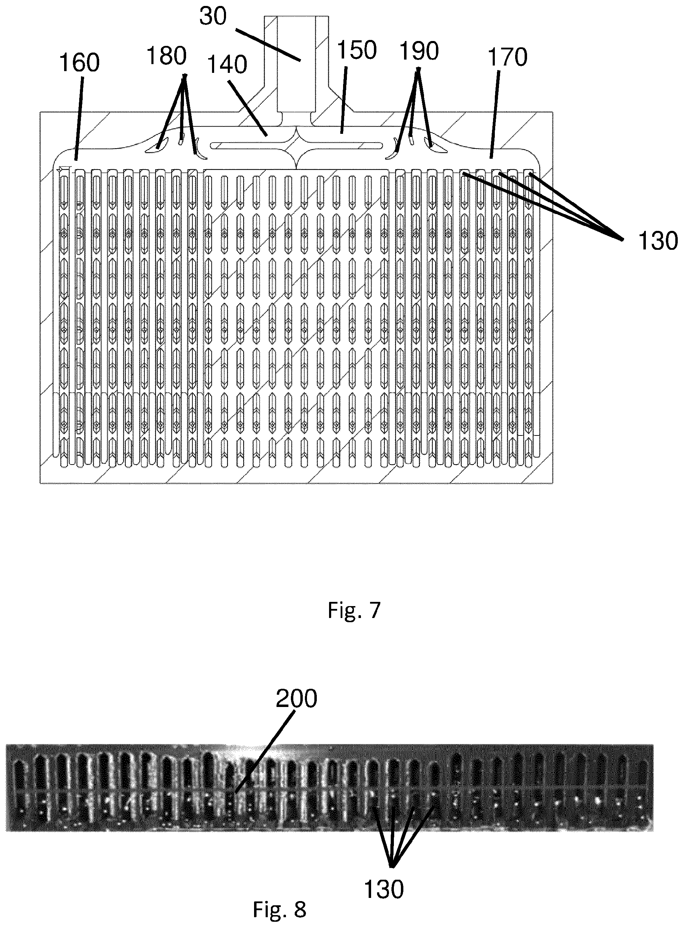

Fig. 6 zeigt einen Querschnitt durch den Wärmetauscher 10 entlang eines zweiten Bereiches 210, der Wärmetauschflüssigkeitseinlass 30 ist oben, der Wärmetauschflüssigkeitsauslass 40 ist unten. Die Wärmetauschflüssigkeit gelangt über einen in Fig. 7 und Fig. 8 gezeigten Wärmetauschflüssigkeitsverteilungsbereich durch die Öffnung 130 in den zweiten Bereich 210. Durch die Umlenkwände 110 wird die Wärmetauschflüssigkeit schlangenförmig durch den zweiten Bereich 210 geführt. Die Umlenkwände 100 schließen jeweils wechselweise an die gegenüberliegenden Seitenwände 70 an und sind mit diesen auch über Eckelemente 120 verbunden. Die Eckelemente 120 stellen zum einen sicher, dass keine Pulverrückstände einer additiven Fertigung im Inneren verbleiben. Zum anderen vermeiden diese Totvolumen in Wärmetauschflüssigkeitsstrom und somit lokale Überhitzungen. Rein beispielhaft ist gezeigt, dass das Eckelement 120 oben rechts, direkt unterhalb des Wärmetauschflüssigkeitsverteilungsbereichs keine dreieckige Form aufweist, sondern zwei unterschiedliche Schrägungen aufweist, sodass der Winkel zwischen Umlenkwand 110 und dem Eckelement unter 45 ° liegt.

Fig. 7 zeigt den Wärmetauschflüssigkeitsverteilungsbereich im horizontalen Schnitt. Die Wärmetauschflüssigkeit strömt durch den Wärmetauschflüssigkeitseinlass 30 ein und wird in einen ersten Teilstrom 140 und einen zweiten Teilstrom 150 geteilt. Um Platz zu sparen verlaufen die Teilströme 140, 150 rechtwinklig zum Wärmetauschflüssigkeitseinlass 30 und somit parallel zur Seitenwand 70. Der Wärmetauschflüssigkeitsstrom wird aus dem ersten Teilstrom 140 mittels dreier erster Strömungskörper 180 in den ersten Verbindungsbereich 160. Auf der anderen Seite wird entsprechend der Wärmetauschflüssigkeitsstrom aus dem zweiten Teilstrom 150 mittels dreier zweiter Strömungskörper 190 in den zweiten Verbindungsbereich 170 geleitet. Hierdurch wird eine weitest gehende Homogenisierung des Wärmetauschflüssigkeitsstromes erreicht, eine vollständige Vergleichmäßigung ist jedoch extrem schwierig. Um diese Unterscheide weiter auszugleichen und somit zu erreichen, dass durch alle zweiten Bereiche 210 gleiche Mengen an Wärmetauschflüssigkeit fließen, sind die Öffnungen 130 unterschiedlich groß, wie dieses im Querschnitt in Fig. 8 gut zu erkennen ist. Die Wirksamkeit zeigt sich, dass bei einem Test eine einheitlich hohe Wasserlinie ergibt, der Wärmetauschflüssigkeitsdruck somit überall gleich hoch ist und damit die durch die zweiten Bereiche 210 fließende Menge an Wärmetauschflüssigkeit.

### Bezugszeichen

- 10: Wärmetauscher
- 20: Oberseite
- 30: Wärmetauschflüssigkeitseinlass
- 40: Wärmetauschflüssigkeitsauslass
- 50: erster Bereich
- 60: Trennwand
- 70: Seitenwand
- 80: Prellblech
- 90: Gasstrom
- 100: Kondensatfluss
- 110: Umlenkwand
- 120: Eckelement
- 130: Öffnung
- 140: erster Teilstrom
- 150: zweiter Teilstrom
- 160: erster Verbindungsbereich
- 170: zweiter Verbindungsbereich
- 180: erster Strömungskörper
- 190: zweiter Strömungskörper
- 200: Wasserlinie
- 210: zweiter Bereich

## Patentansprüche

1. Wärmetauscher (10), wobei der Wärmetauscher (10) als Plattenwärmetauscher ausgeführt ist, wobei der Wärmetauscher (10) Trennwände (60) aufweist, wobei der Wärmetauscher (10) erste Bereiche (50) zwischen den Trennwänden (60) für ein gasförmiges wärmeabgebendes Medium und zweite Bereiche (210) zwischen den Trennwänden (60) für eine wärmeaufnehmende Wärmetauschflüssigkeit aufweist, wobei die ersten Bereiche (50) und die zweiten Bereiche (210) durch eine Mehrzahl von Trennwände (60) getrennt sind, wobei jeweils zwischen zwei benachbarten Trennwänden (60) alternierend erste Bereiche (50) und zweite Bereiche (210) angeordnet sind, wobei der Wärmetauscher (10) einen Wärmetauschflüssigkeitseinlass (30) und einen Wärmetauschflüssigkeitsauslass (40) aufweist, wobei zwischen dem Wärmetauschflüssigkeitseinlass (30) und den zweiten Bereichen (210) ein Wärmetauschflüssigkeitsverteilungsbereich angeordnet ist, wobei das gasförmige Medium den Wärmetauscher (10) von unten nach oben durchströmen kann, wobei die Wärmetauschflüssigkeit den Wärmetauscher (10) von oben nach unten durchströmen kann, wobei Wärmetauschflüssigkeitsverteilungsbereich wenigstens einen ersten Verbindungsbereich (160) und einen zweiten Verbindungsbereich (170) aufweist, wobei die Verbindungsbereiche (160, 170) den Wärmetauschflüssigkeitsstrom durch mehrere Öffnungen (130) in die zweiten Bereiche (210) leiten, **dadurch gekennzeichnet, dass** der Wärmetauschflüssigkeitseinlass (30) seitlich am oberen Rand des Wärmetauschers (10) angeordnet ist und die Öffnungen (130) zwischen den Verbindungsbereichen (160, 170) und den zweiten Bereichen (210) unterschiedlich groß sind, wobei die Größe der Öffnungen (130) so eingestellt ist, dass in alle zweiten Bereiche jeweils die gleiche Menge an Wärmetauschflüssigkeit in der gleichen Zeit strömt, wobei der Wärmetauschflüssigkeitseinlass (30) mittig am oberen Rand des Wärmetauschers (10) angeordnet ist.

2. Wärmetauscher (10) nach Anspruch 1, **dadurch gekennzeichnet, dass** der Wärmetauschflüssigkeitsverteilungsbereich den Wärmetauschflüssigkeitsstrom in einen ersten Teilstrom (140) und einen zweiten Teilstrom (150) teilt, wobei der erste Teilstrom (140) und der zweite Teilstrom (150) seitlich in entgegengesetzte Richtungen geleitet werden, wobei der Wärmetauschflüssigkeitsverteilungsbereich wenigstens einen ersten Verbindungsbereich (160) und einen zweiten Verbindungsbereich (170) aufweist, wobei der erste Verbindungsbereich (160) die Wärmetauschflüssigkeit aus dem ersten Teilstrom (140) und der zweite Verbindungsbereich (170) die Wärmetauschflüssigkeit aus dem zweiten Teilstrom (150) durch mehrere Öffnungen (130) in die zweiten Bereiche (210) leiten.

3. Wärmetauscher (10) nach Anspruch 2, **dadurch gekennzeichnet, dass** zwischen dem ersten Teilstrom (140) und dem ersten Verbindungsbereich (160) wenigstens ein erster Strömungskörper (180) angeordnet ist, wobei zwischen dem zweiten Teilstrom (150) und dem zweiten Verbindungsbereich (170) wenigstens ein zweiter Strömungskörper (190) angeordnet ist.

4. Wärmetauscher (10) nach einem der vorstehenden Ansprüche, **dadurch gekennzeichnet, dass** die zweiten Bereiche (210) wenigstens drei im Wesentlichen horizontal verlaufende Umlenkwände (110) aufweisen, wobei sich die Umlenkwände (110) über 50 % bis 85 % der Breite der zweiten Bereiche (210) erstrecken, wobei sich die oberste Umlenkwand (110) auf der Seite des Wärmetauschflüssigkeitsverteilungsbereichs befindet, wobei die Umlenkwände (110) alternierend von den gegenüberliegenden Seiten der zweiten Bereiche (210) beginnen, sodass sich für die Wärmetauschflüssigkeit eine schleifenförmige Durchströmung des zweiten Bereichs (210) ergibt, wobei zwischen jeder Umlenkwand (110) und den Außenwänden des zweiten Bereichs (210) Eckelemente (120) angeordnet sind, wobei der Winkel zwischen dem Eckelement (120) und der Umlenkwand (110) maximal 45 ° beträgt, wobei der Winkel zwischen dem Eckelement (120) und der Außenwand maximal 45 ° beträgt.

5. Wärmetauscher (10) nach einem der vorstehenden Ansprüche, **dadurch gekennzeichnet, dass** der Wärmetauschflüssigkeitseinlass (30) einen tropfenförmigen Querschnitt aufweist.

6. Wärmetauscher (10) nach einem der vorstehenden Ansprüche, **dadurch gekennzeichnet, dass** die ersten Bereiche (50) Prellbleche (80) aufweisen, wobei die Prellbleche (80) senkrecht zu den Trennwänden (60) angeordnet sind, wobei die Prellbleche (80) zueinander beabstandet sind, wobei die Prellbleche (80) übereinander im zickzack angeordnet sind, wobei die zickzack-Reihen der Prellbleche (80) nebeneinander angeordnet sind, wobei die Seitenwände der Prellbleche (80) einen Winkel zur Trennwand (60) von maximal 45 ° aufweist.

7. Wärmetauscher (10) nach Anspruch 6, **dadurch gekennzeichnet, dass** die Prellbleche (80) sich auf den gegenüberliegenden Trennwänden (60) jeweils paarweise gegenüberliegend angeordnet sind, wobei die sich gegenüberliegenden Prellbleche (80) in der Mitte zwischen den Trennwänden (60) miteinander verbunden sind.

8. Verfahren zur Herstellung eines Wärmetauschers (10) nach einem der vorstehenden Ansprüche mittels additiver Fertigungstechniken.

9. Unterseeboot mit einer Brennstoffzellenvorrichtung, wobei die Brennstoffzellenvorrichtung wenigstens einen Wärmetauscher (10) nach einem der Ansprüche 1 bis 7 aufweist.

## Claims

1. A heat exchanger (10), wherein the heat exchanger (10) is designed as a plate heat exchanger, wherein the heat exchanger (10) has dividing walls (60), wherein the heat exchanger (10) has first regions (50) between the dividing walls (60) for a gaseous heat-releasing medium and second regions (210) between the dividing walls (60) for a heat-absorbing heat exchange fluid, wherein the first regions (50) and the second regions (210) are separated by a multitude of dividing walls (60), wherein alternating first regions (50) and second regions (210) are arranged between every two adjacent dividing walls (60), wherein the heat exchanger (10) has a heat exchange fluid inlet (30) and a heat exchange fluid outlet (40), wherein a heat exchange fluid distribution region is disposed between the heat exchange fluid inlet (30) and the second regions (210), wherein the gaseous medium can flow through the heat exchanger (10) from the bottom upward, wherein the heat exchange fluid flows through the heat exchanger (10) from the top downward, wherein the heat exchange fluid distribution region has at least a first connecting region (160) and a second connecting region (170), wherein the connecting regions (160, 170) guide the heat exchange fluid stream through multiple openings (130) into the second regions (210), wherein the heat exchange fluid inlet (30) is disposed laterally at the upper edge of the heat exchanger (10) and the openings (130) between the connecting regions (160, 170) and the second regions (210) are of different size, wherein the size of the openings (130) is adjusted such that the same amount of heat exchange fluid flows into each second region in the same period of time, wherein the heat exchange fluid inlet (30) is arranged centrally on the upper edge of the heat exchanger (10).

2. The heat exchanger (10) as claimed in claim 1, **characterized in that** the heat exchange fluid distribution region divides the heat exchange fluid stream into a first substream (140) and a second substream (150), wherein the first substream (140) and the second substream (150) are guided laterally in opposite directions, wherein the heat exchange fluid distribution region has at least a first connecting region (160) and a second connecting region (170), wherein the first connecting region (160) guides the heat exchange fluid from the first substream (140) and the second connecting region (170) guides the heat exchange fluid from the second substream (150) through multiple openings (130) into the second regions (210).

3. The heat exchanger (10) as claimed in claim 2, **characterized in that** at least a first flow body (180) is disposed between the first substream (140) and the first connecting region (160), with at least a second flow body (190) disposed between the second substream (150) and the second connecting region (170).

4. The heat exchanger (10) as claimed in any of the preceding claims, **characterized in that** the second regions (210) have at least three essentially horizontal deflecting walls (110), wherein the deflecting walls (110) extend over 50% to 85% of the width of the second regions (210), wherein the uppermost deflecting wall (110) is on the side of the heat exchange fluid distribution region, wherein the deflecting walls (110) commence in an alternating manner from the opposite sides of the second regions (210), so as to result in a looping flow through the second region (210) for the heat exchange fluid, with corner elements (120) disposed between each deflecting wall (110) and the outer walls of the second region (210), wherein the angle between the corner element (120) and the deflecting wall (110) is not more than 45°, wherein the angle between the corner element (120) and the outer wall is not more than 45°.

5. The heat exchanger (10) as claimed in any of the preceding claims, **characterized in that** the heat exchange fluid inlet (30) has a droplet-shaped cross section.

6. The heat exchanger (10) as claimed in any of the preceding claims, **characterized in that** the first regions (50) have baffle plates (80), wherein the baffle plates (80) are arranged at right angles to the dividing walls (60), wherein the baffle plates (80) are spaced apart from one another, wherein the baffle plates (80) are arranged one on top of another in a zigzag, wherein the zigzag rows of the baffle plates (80) are arranged alongside one another, wherein the side walls of the baffle plates (80) have an angle with the dividing wall (60) of not more than 45°.

7. The heat exchanger (10) as claimed in claim 6, **characterized in that** the baffle plates (80) are each arranged in pairs opposite one another on the opposite dividing walls (60), wherein the opposite baffle plates (80) are connected to one another in the middle between the dividing walls (60).

8. A process for producing a heat exchanger (10) as claimed in any of the preceding claims by means of additive manufacturing techniques.

9. A submarine having a fuel cell device, wherein the fuel cell device includes at least one heat exchanger (10) as claimed in any of claims 1 to 7.

## Revendications

1. Échangeur de chaleur (10), dans lequel l'échangeur de chaleur (10) est conçu comme un échangeur de chaleur à plaques, dans lequel l'échangeur de chaleur (10) comporte des parois de séparation (60), dans lequel l'échangeur de chaleur (10) comporte des premières zones (50) entre les parois de séparation (60) pour un fluide gazeux libérant de la chaleur et des secondes zones (210) entre les parois de séparation (60) pour un fluide caloporteur absorbant de la chaleur, dans lequel les premières zones (50) et les secondes zones (210) sont séparées par une multitude de parois de séparation (60), dans lequel des premières régions (50) et des deuxièmes régions (210) sont disposées en alternance entre chaque paire de parois de séparation adjacentes (60), dans lequel l'échangeur de chaleur (10) comporte une entrée de fluide d'échange de chaleur (30) et une sortie de fluide d'échange de chaleur (40), dans lequel une zone de distribution de fluide caloporteur est disposée entre l'entrée de fluide caloporteur (30) et les secondes zones (210), dans lequel le milieu gazeux peut s'écouler à travers l'échangeur de chaleur (10) de bas en haut, dans lequel le fluide caloporteur s'écoule à travers l'échangeur de chaleur (10) de haut en bas, dans lequ , la zone de distribution de fluide caloporteur comporte au moins une première zone de raccordement (160) et une deuxième zone de raccordement (170), dans lequel les zones de raccordement (160, 170) guident le flux de fluide caloporteur à travers plusieurs ouvertures (130) dans les deuxièmes zones (210), dans lequel l'entrée de fluide caloporteur (30) est disposée latéralement au niveau du bord supérieur de l'échangeur de chaleur (10) et les ouvertures (130) entre les régions de raccordement (160, 170) et les secondes régions (210) sont de tailles différentes, la taille des ouvertures (130) étant ajustée de telle sorte que la même quantité de fluide d'échange thermique s'écoule dans chaque seconde région pendant la même période de temps, l'entrée de fluide d'échange thermique (30) étant disposée de manière centrale sur le bord supérieur de l'échangeur de chaleur (10).

2. L'échangeur de chaleur (10) selon la revendication 1, **caractérisé en ce que** la région de distribution du fluide d'échange de chaleur divise le flux de fluide d'échange de chaleur en un premier sous-flux (140) et un deuxième sous-flux (150), dans lequel le premier sous-flux (140) et le deuxième sous-flux (150) sont guidés latéralement dans des directions opposées, dans lequel la région de distribution du fluide d'échange de chaleur comporte au moins une première région de connexion (160) et une deuxième zone de raccordement (170), la première zone de raccordement (160) guidant le fluide d'échange thermique provenant du premier sous-flux (140) et l' e deuxième zone de raccordement (170) guidant le fluide d'échange thermique provenant du deuxième sous-flux (150) à travers plusieurs ouvertures (130) dans les deuxièmes zones (210).

3. L'échangeur de chaleur (10) selon la revendication 2, **caractérisé en ce qu'**au moins un premier corps d'écoulement (180) est disposé entre le premier sous-flux (140) et la première zone de raccordement (160), avec au moins un deuxième corps d'écoulement (190) disposé entre le deuxième sous-flux (150) et la deuxième zone de raccordement (170).

4. L'échangeur de chaleur (10) selon l'une quelconque des revendications précédentes, **caractérisé en ce que** les secondes régions (210) comportent au moins trois parois déflectrices (110) essentiellement horizontales, les parois déflectrices (110) s'étendant sur 50 % à 85 % de la largeur des secondes régions (210), la paroi déflectrice supérieure (110) se trouve du côté de la région de distribution du fluide d'échange thermique, dans lequel les parois déflectrices (110) commencent de manière alternée à partir des côtés opposés des secondes régions (210), de manière à créer un écoulement en boucle à travers la seconde région (210) pour le fluide d'échange thermique, avec des éléments d'angle (120) disposés entre chaque paroi déflectrice (110) et les parois extérieures de la deuxième région (210), dans lequel l'angle entre l'élément d'angle (120) et la paroi déflectrice (110) n'est pas supérieur à 45°, dans lequel l'angle entre l'élément d'angle (120) et la paroi extérieure n'est pas supérieur à 45°.

5. L'échangeur de chaleur (10) selon l'une quelconque des revendications précédentes, **caractérisé en ce que** l'entrée de fluide d'échange thermique (30) présente une section transversale en forme de gouttelette.

6. L'échangeur de chaleur (10) selon l'une quelconque des revendications précédentes, **caractérisé en ce que** les premières régions (50) comportent des déflecteurs (80), les déflecteurs (80) étant disposés à angle droit par rapport aux parois de séparation (60), dans lequel les plaques déflectrices (80) sont espacées les unes des autres, dans lequel les plaques déflectrices (80) sont disposées les unes au-dessus des autres en zigzag, dans lequel les rangées en zigzag des plaques déflectrices (80) sont disposées les unes à côté des autres, dans lequel les parois latérales des plaques déflectrices (80) forment un angle avec la paroi de séparation (60) qui n'est pas supérieur à 45°.

7. L'échangeur de chaleur (10) selon la revendication 6, **caractérisé en ce que** l's des déflecteurs (80) sont disposées par paires opposées les unes aux autres sur les parois de séparation (60) opposées, les déflecteurs opposés (80) étant reliés entre eux au milieu entre les parois de séparation (60).

8. Procédé de fabrication d'un échangeur de chaleur (10) selon l'une quelconque des revendications précédentes au moyen de techniques de fabrication additive.

9. Sous-marin équipé d'un dispositif à pile à combustible, dans lequel le dispositif à pile à combustible comprend au moins un échangeur de chaleur (10) selon l'une quelconque des revendications 1 à 7.
